# EUROPEAN PATENT APPLICATION

(11) **EP 4 570 147 A1**
(43) Date of publication of application: **18.06.2025**
(21) Application number: 23215879.0
(22) Date of filing: 12.12.2023
(51) Int. Cl.: A47J 43/07, A47J 43/08, A47J 27/00

(54) **FOOD PREPARATION UTENSIL AND FOOD PREPARATION ASSEMBLY COMPRISING THE SAME**

(71) Applicant: Versuni Holding B.V., 5656 AE Eindhoven (NL)
(72) Inventor: HIETBRINK, Ingrid, 5656 AE Eindhoven (NL)
(74) Representative: Vollering, Stefanus Franciscus Maria

(57) **Abstract**

Provided is a detachable food preparation utensil (100) for detachably coupling to a kitchen appliance (102). The detachable food preparation utensil comprises an actuation assembly (106, 108) that is actuatable by an actuator (110, 112) of the kitchen appliance to enable a mechanical operation to be implemented by the detachable food preparation utensil when coupled to the kitchen appliance. The detachable food preparation utensil further comprises a utensil cooling fan (120) configured to generate a flow of air to cool at least part of the detachable food preparation utensil at least when the detachable food preparation utensil is coupled to the kitchen appliance. Further provided is a food preparation assembly (132) comprising the detachable food preparation utensil and the kitchen appliance.

## Description

### FIELD OF THE INVENTION

The invention relates to a food preparation utensil for detachably coupling to a kitchen appliance. The invention further relates to a food preparation assembly comprising the food preparation utensil and the kitchen appliance.

### BACKGROUND OF THE INVENTION

Various food preparation assemblies are known that include a kitchen appliance, e.g. base station/base part, and a food preparation utensil, e.g. accessory, for detachably coupling to the kitchen appliance. For example, the food preparation utensil can be detachably mounted on top of the kitchen appliance.

The kitchen appliance tends to include a motor, an appliance coupling part, and/or a heating element, such as a resistive heating element or an induction heating element for transmitting or generating heat to enable heating or cooking of food ingredients in/on the food preparation utensil.

A flow of air tends to be used to cool the motor and/or electronics in motor-comprising kitchen appliances.

### SUMMARY OF THE INVENTION

For food preparation assemblies having a detachable food preparation utensil, e.g. a removable food container, and especially food preparation assemblies in which the detachable food preparation utensil can be heated, elevated temperatures in the detachable food preparation utensil can present a significant technical challenge. This is because the operating lifetime of certain parts of the detachable food preparation utensil, such as seal(s) and/or bearing(s) that support rotating component(s), can risk being compromised by such elevated temperatures.

For example, heat generated by a resistive heating element, or heat induced in a heatable portion of the detachable food preparation utensil by operation of an induction heating element included in the kitchen appliance, may be transferred to food ingredients supported by the detachable food preparation utensil. However, after a certain time some or all components of the detachable food preparation utensil may also be affected by this heat.

In the case of the above-mentioned bearing, material of the bearing's rolling parts, e.g. as well as grease lubricating the bearing, may be heated during use of the food preparation utensil. For temperatures up to 70°C, the bearings/grease may have an acceptable operating lifetime. However, for each 15°C rise above 70°C, the operating lifetime of the bearing can be halved.

In the case of a detachable food preparation utensil having a magnetic coupling part, permanent magnets, such as neodymium magnets, that may be included in the magnetic coupling part can exhibit their normal/specified magnetic strength at temperatures typically below 80°C. But above 80°C, the magnetic strength of such permanent magnets may decrease and at a certain temperature they may be destroyed, in other words may suffer irreversible loss of magnetism.

These issues may give rise to alternative solutions for actuating/moving an actuation assembly, e.g. rotating element(s), included in a food preparation utensil, for example by arranging the actuation assembly at an opposite end, e.g. a top end, of the food preparation utensil from the end, e.g. a bottom end, at which heating is provided. Alternatively or additionally, there may be a compromise in terms of heating/temperature range.

These alternative solutions can, however, have their own drawbacks. For example, limiting the heating/temperature range may impose undesirable limitations on how quickly/effectively food ingredients can be heated or cooked.

The present disclosure provides a solution for cooling part(s), e.g. vulnerable/temperature-sensitive component(s), of a detachable food preparation utensil. The proposed solution may, for example, mean that little or no compromise is necessary in terms of heating/temperature range.

The invention is defined by the claims.

According to examples in accordance with an aspect of the invention, there is provided a detachable food preparation utensil for detachably coupling to a kitchen appliance, the detachable food preparation utensil comprising an actuation assembly that is actuatable by an actuator of the kitchen appliance to enable a mechanical operation to be implemented by the detachable food preparation utensil when coupled to the kitchen appliance, wherein the detachable food preparation utensil further comprises a utensil cooling fan configured to generate a flow of air to cool at least part of the detachable food preparation utensil at least when the detachable food preparation utensil is coupled to the kitchen appliance.

The dedicated air cooling of the detachable food preparation utensil provided by the utensil cooling fan can assist to lessen the risk of temperature-sensitive components included in the detachable food preparation utensil failing due to exposure to elevated temperatures during use. In this way, the operating lifetime of the detachable food preparation utensil may be prolonged.

The utensil cooling fan may be arranged to draw air, e.g. ambient air from outside the detachable food preparation utensil, towards the at least part of the detachable food preparation utensil, and force air heated by the at least part of the detachable food preparation utensil away therefrom, e.g. to the outside of the detachable food preparation utensil.

In some embodiments, the utensil cooling fan is actuatable by the actuator of the kitchen appliance to provide the flow of air, when the detachable food preparation utensil is coupled to the kitchen appliance.

Thus, the utensil cooling fan may be actuated, e.g. caused to rotate, when the actuation assembly is actuated by the kitchen appliance's actuator.

This may assist to ensure that air cooling is provided when it is needed, in other words during use of the detachable food preparation utensil.

In some cases, movement of the actuation assembly that enables the detachable food preparation utensil's mechanical operation to be implemented is at a speed that is inappropriate, e.g. too high or too low, for movement of the utensil cooling fan. For this reason, the detachable food preparation utensil may include a gear assembly configured to enable the utensil cooling fan and at least part of the actuation assembly to be driven by the actuator at different speeds relative to each other.

In some embodiments, the gear assembly, e.g. gear box, is arranged to drive the utensil cooling fan at a higher rotational speed than the rotational speed at which a food implement of the actuation assembly is driven by the actuator to implement the mechanical operation.

This may assist to ensure that sufficient cooling is provided despite relatively slow movement of the food implement, e.g. for stirring or kneading of food ingredients.

In some embodiments, the at least part of the detachable food preparation utensil that is cooled by the flow of air provided by the utensil cooling fan comprises at least one bearing for supporting rotating component(s) of the actuation assembly, at least one seal, and/or at least one magnet, e.g. at least one permanent magnet. Such components may be particularly susceptible to failure when exposed to elevated temperatures during use of the food preparation utensil.

The mechanical operation can be of any suitable type. In some embodiments, the mechanical operation comprises a mechanical food processing operation, for example one or more of blending, stirring, cutting, kneading and mixing.

To this end, the detachable food preparation utensil's food implement may be moveable by the actuator to enable mechanical processing of food ingredients.

The food implement can include, e.g. be in the form of, a food processing tool, a blender tool, a stirrer tool, a cutter, a dough kneader or a mixer.

In some embodiments, the actuation assembly comprises, e.g. in addition to the food implement, a mechanical coupling part and/or magnetic coupling part for mechanically and/or magnetically coupling to an appliance coupling part, in other words an appliance mechanical coupling part and/or an appliance magnetic coupling part, included in the kitchen appliance.

In at least some embodiments, the detachable food preparation utensil comprises a container in which food ingredients are receivable for processing via the mechanical operation implemented by the detachable food preparation utensil.

In such embodiments, the food implement may be moved, e.g. rotated, within the container to enable mechanical processing of food ingredients received in the container.

In some embodiments, the detachable food preparation utensil may include a heatable portion that is heatable by operation of a heating element, e.g. a resistive heating element or an induction heating element, included in the kitchen appliance. Thus, the detachable food preparation utensil may be used for heating or cooking food ingredients, e.g. as well as mechanical processing of the food ingredients.

In such embodiments, the utensil cooling fan may assist to protect temperature-sensitive components included in the detachable food preparation utensil from failure caused, at least in part, by heating of the heatable portion.

In embodiments in which the heating element comprises an induction heating element, the heatable portion may include an electrically conductive material, for example an electrically conductive and ferromagnetic material, in which heat can be induced by operation of the induction heating element.

Heat induced, due to the induction heating element, in the detachable food preparation utensil's heatable portion may be transferred to food ingredients, e.g. food ingredients received in the container, via thermal conduction.

In embodiments in which the heating element comprises a resistive heating element, the heatable portion may comprise a thermally conductive material arranged to conduct heat generated by the heating element to food ingredients, e.g. food ingredients received in the container.

In some embodiments, the detachable food preparation utensil comprises a utensil housing. The utensil housing may, for instance, house the at least part of the detachable food preparation utensil that is cooled by the utensil cooling fan.

In some embodiments, at least one gap is provided in the utensil housing to allow, at least when the detachable food preparation utensil is coupled to the kitchen appliance, (i) supply of air from outside the utensil housing to cool the at least part of the detachable food preparation utensil; and/or (ii) release of air heated by the at least part of the detachable food preparation utensil to the outside of the utensil housing.

In some embodiments, the at least one gap comprises at least one outlet gap for releasing the air heated by the at least part of the detachable food preparation utensil to the outside of the utensil housing. In such embodiments, the utensil cooling fan may be arranged to force the air heated by the at least part of the detachable food preparation utensil through the outlet gap(s).

In some embodiments, one or more of the at least one outlet gap is arranged to release the air heated by the at least part of the detachable food preparation utensil to the surroundings and/or into an air cooling channel of the kitchen appliance when the detachable food preparation utensil is coupled to the kitchen appliance.

Alternatively or additionally, the at least one gap may comprise at least one inlet gap for receiving air from outside the utensil housing to cool the at least part of the detachable food preparation utensil. In such embodiments, the utensil cooling fan may be arranged to draw the air from outside the utensil housing through the inlet gap(s) and to the at least part of the detachable food preparation utensil.

In some embodiments, one or more of the at least one inlet gap is arranged to receive air from the surroundings and/or from an air cooling channel of the kitchen appliance when the detachable food preparation utensil is coupled to the kitchen appliance.

The detachable food preparation utensil may include an air channel assembly, e.g. an air channel assembly that is at least partly defined inside the utensil housing, in which the flow of air is guided to and then away from the at least part of the detachable food preparation utensil.

The flow guidance provided by the flow channel assembly may assist to guide the flow of air around, and thereby provide cooling to, the temperature-sensitive/vulnerable component(s) included in the detachable food preparation utensil, such as the bearing(s), seal(s), and/or magnet(s).

According to another aspect, there is provided a food preparation assembly comprising: the detachable food preparation utensil according to any of the embodiments described herein; and a kitchen appliance to which the detachable food preparation utensil is detachably couplable, the kitchen appliance comprising an actuator for actuating the actuation assembly to implement the mechanical operation when the detachable food preparation utensil is coupled to the kitchen appliance.

In some embodiments, the kitchen appliance comprises a heating element, e.g. a resistive heating element or an induction heating element, operable to heat the heatable portion of the food preparation utensil.

It is reiterated that the utensil cooling fan may assist to protect temperature-sensitive components included in the detachable food preparation utensil from failure caused, at least in part, by heating of the heatable portion.

The actuator can have any suitable design provided that the actuator is capable of actuating the actuation assembly. In at least some embodiments, the actuator comprises a motor.

In some embodiments, the kitchen appliance comprises an appliance cooling fan, provided in addition to the utensil cooling fan. The appliance cooling fan may be configured to generate a further flow of air to cool at least part of the food preparation assembly, e.g. at least part of the kitchen appliance and/or the food preparation utensil.

In some embodiments, the at least part of the food preparation assembly that is cooled by the appliance cooling fan comprises the actuator, e.g. the motor and/or the appliance coupling included in the actuator. Electronics in the kitchen appliance can alternatively or additionally be cooled by the appliance cooling fan.

The appliance cooling fan may be arranged to draw air, e.g. ambient air from outside the food preparation assembly, towards the at least part of the food preparation assembly, and force air heated by the at least part of the food preparation assembly away therefrom, e.g. to the outside of the food preparation assembly.

In some embodiments, the kitchen appliance comprises an appliance housing. The appliance housing may, for instance, house the at least part of the food preparation assembly, e.g. the actuator, that is cooled by the appliance cooling fan.

In some embodiments, at least one opening in the appliance housing is provided to allow (i) supply of air from outside the appliance housing to cool the at least part of the food preparation assembly; and/or (ii) release of air heated by the at least part of the food preparation assembly to the outside of the appliance housing.

The at least one opening may comprise at least one outlet opening for releasing the air heated by the at least part of the food preparation assembly to the outside of the appliance housing. In such embodiments, the utensil cooling fan and/or the appliance cooling fan may be arranged to force the air heated by the at least part of the food preparation assembly through the outlet opening(s).

Alternatively or additionally, the at least one opening may comprise at least one inlet opening for receiving air from outside the appliance housing to cool at least part of the food preparation assembly. In such embodiments, the utensil cooling fan and/or the appliance cooling fan may be arranged to draw the air from outside the appliance housing through the inlet opening(s) and to the at least part of the food preparation assembly.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
FIG. 1 schematically depicts a food preparation assembly according to an example;
FIGs. 2A and 2B provide views of a food preparation assembly according to another example; and
FIG. 3 shows a detachable food preparation utensil according to an example.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

Provided is a detachable food preparation utensil for detachably coupling to a kitchen appliance. The detachable food preparation utensil comprises an actuation assembly that is actuatable by an actuator of the kitchen appliance to enable a mechanical operation to be implemented by the detachable food preparation utensil when coupled to the kitchen appliance. The detachable food preparation utensil further comprises a utensil cooling fan configured to generate a flow of air to cool at least part of the detachable food preparation utensil at least when the detachable food preparation utensil is coupled to the kitchen appliance. Further provided is a food preparation assembly comprising the detachable food preparation utensil and the kitchen appliance.

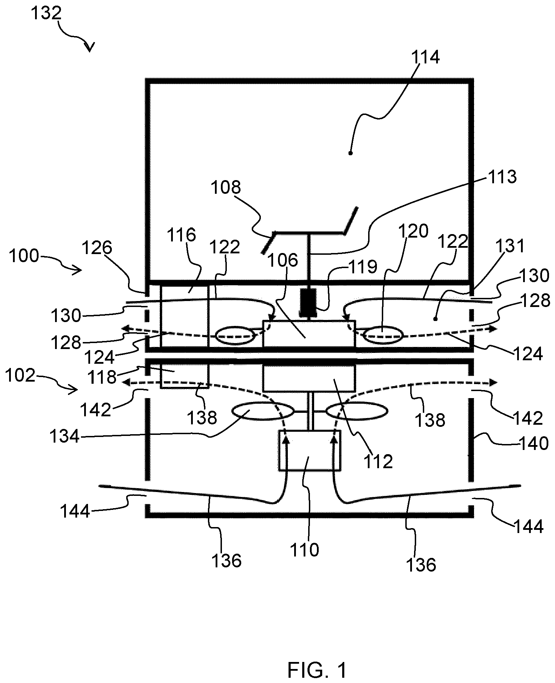

FIG. 1 schematically depicts a detachable food preparation utensil 100 according to an example. The detachable food preparation utensil 100 is detachably couplable to a kitchen appliance 102.

In some embodiments, such as shown in FIG. 1, the kitchen appliance 102 comprises, e.g. is in the form of, a base station, and the detachable food preparation utensil 100 is detachably couplable to the kitchen appliance 102 by being detachably mounted on the base station.

The capability to detach the detachable food preparation utensil 100 from the kitchen appliance 102, e.g. from the base station, may facilitate cleaning of the detachable food preparation utensil 100 and/or may enable different food preparation utensils having different functionality to be coupled to the kitchen appliance 102.

The detachable food preparation utensil 100 comprises an actuation assembly 106, 108 that is actuatable by an actuator 110, 112 included in the kitchen appliance 102 to enable a mechanical operation to be implemented by the detachable food preparation utensil 100 when the kitchen appliance 102 and the detachable food preparation utensil 100 are coupled to each other.

The mechanical operation can be of any suitable type. In some embodiments, the mechanical operation comprises a mechanical food processing operation, for example one or more of blending, stirring, cutting, kneading, and mixing.

To this end, the detachable food preparation utensil 100 may include a food implement 108 that is moveable by the actuator 110, 112 to enable mechanical processing of food ingredients.

The food implement 108 can include, e.g. be in the form of, a food processing tool, a blender tool, a stirrer tool, a cutter, a dough kneader or a mixer.

The actuator 110, 112 can have any suitable design provided that the actuator 110, 112 is capable of actuating the actuation assembly 106, 108. In at least some embodiments, the actuator 110, 112 comprises a motor 110.

In some embodiments, such as shown in FIG. 1, the actuation assembly 106, 108 comprises, e.g. in addition to the food implement 108, a mechanical coupling part and/or magnetic coupling part 106 for mechanically and/or magnetically coupling to an appliance coupling part 112 included in the kitchen appliance 102.

The appliance coupling part 112 may comprise, e.g. be in the form of, an appliance mechanical coupling part and/or an appliance magnetic coupling part 112.

In such embodiments, the appliance coupling part 112 may be regarded as a driving coupling part, e.g. a driving coupling part that is driven by the motor 110, with the mechanical coupling part and/or magnetic coupling part 106 included in the actuation assembly 106, 108 correspondingly being a driven coupling part.

In some embodiments, such as shown in FIG. 1, the food implement 108 is coupled or couplable to the mechanical coupling part and/or magnetic coupling part 106 so that movement of the mechanical coupling part and/or magnetic coupling part 106 by the appliance coupling part 112 causes the food implement 108 to move, e.g. rotate.

To this end, the food implement 108 may, for example, be coupled to the mechanical coupling part and/or magnetic coupling part 106 via an axle 113.

In at least some embodiments, such as shown in FIG. 1, the detachable food preparation utensil 100 comprises a container 114 in which food ingredients are receivable for processing via the mechanical operation implemented by the detachable food preparation utensil 100.

In such embodiments, the food implement 108 may be moved, e.g. rotated, within the container 114 to enable mechanical processing of food ingredients received in the container 114.

Alternatively or additionally, the detachable food preparation utensil 100 may include a heatable portion 116 that is heatable by operation of a heating element 118, e.g. a resistive heating element or an induction heating element, included in the kitchen appliance 102.

In embodiments in which the heating element 118 comprises an induction heating element, the heatable portion 116 may include an electrically conductive material, for example an electrically conductive and ferromagnetic material, in which heat can be induced by operation of the induction heating element.

Heat induced, due to operation of the induction heating element 118, in the detachable food preparation utensil's 100 heatable portion 116 may be transferred to food ingredients, e.g. food ingredients received in the container 114, via thermal conduction.

In embodiments in which the heating element 118 comprises a resistive heating element, the heatable portion 116 may comprise a thermally conductive material arranged to conduct heat generated by the heating element 118 to food ingredients, e.g. food ingredients received in the container 114.

More generally, the detachable food preparation utensil 100, e.g. the actuation assembly 106, 108 thereof, may include various temperature-sensitive components 119, such as bearing(s), seal(s), and/or magnet(s), e.g. permanent magnet(s) included in the magnetic coupling part 106. Such temperature-sensitive components 119 may risk failing due to being exposed to elevated temperatures during use of the detachable food preparation utensil 100, in particular when the detachable food preparation utensil 100 is coupled to the kitchen appliance 102.

Higher temperatures can, for example, be generated by heating of the heatable portion 116 by operation of the heating element 118.

Accordingly, and with continued reference to FIG. 1, the detachable food preparation utensil 100 comprises a utensil cooling fan 120 configured to generate a flow of air to cool at least part of the detachable food preparation utensil 100, such as bearing(s), seal(s), and/or magnet(s), at least when the detachable food preparation utensil 100 is coupled to the kitchen appliance 102.

The dedicated air cooling of the detachable food preparation utensil 100 provided by the utensil cooling fan 120 can assist to lessen the risk of temperature-sensitive components 119 included in the detachable food preparation utensil 100 failing due to exposure to elevated temperatures during use. In this way, the operating lifetime of the detachable food preparation utensil 100 may be prolonged.

The utensil cooling fan 120 may be arranged to draw air, e.g. ambient air from outside the detachable food preparation utensil 100, towards the at least part of the detachable food preparation utensil 100 (as schematically represented in FIG. 1 by the arrows 122), and force air heated by the at least part of the detachable food preparation utensil 100 away therefrom, e.g. to the outside of the detachable food preparation utensil 100 (as schematically represented in FIG. 1 by the arrows 124).

In some embodiments, such as shown in FIG. 1, the utensil cooling fan 120 is actuatable by the actuator 110, 112 of the kitchen appliance 102 to provide the flow of air. Thus, the utensil cooling fan 120 may be actuated, e.g. caused to rotate, when the actuation assembly 106, 108 is actuated by the kitchen appliance's 102 actuator 110, 112. This may assist to ensure that air cooling is provided when it is needed, in other words during use of the detachable food preparation utensil 100.

Arranging the utensil cooling fan 120 so that it is actuatable by the actuator 110, 112 of the kitchen appliance 102 can be implemented in any suitable manner. In some embodiments, such as shown in FIG. 1, the utensil cooling fan 120 is coupled to the mechanical coupling part and/or magnetic coupling part 106 so that when the mechanical coupling part and/or magnetic coupling part 106 is driven by the appliance coupling part 112, the utensil cooling fan 120 is also moved to provide the flow of air.

For example, fan blades of the utensil cooling fan 120 can be positioned on the mechanical coupling part and/or magnetic coupling part 106.

In some cases, movement of the actuation assembly 106, 108 that enables the detachable food preparation utensil's 100 mechanical operation to be implemented is at a speed that is inappropriate, e.g. too high or too low, for movement of the utensil cooling fan 120. For this reason, the detachable food preparation utensil 100 may include a gear assembly configured to enable the utensil cooling fan 120 and at least part of the actuation assembly 106, 108, e.g. the food implement 108, to be driven at different speeds relative to each other.

In some embodiments, the gear assembly, e.g. gear box, is arranged to drive the utensil cooling fan 120 at a higher rotational speed than the rotational speed at which the food implement 108 of the actuation assembly 106, 106 is driven by the actuator 108, 112 to implement the mechanical operation. This may assist to ensure that sufficient cooling is provided despite relatively slow movement of the food implement 108, e.g. for stirring or kneading of food ingredients.

Gears of the gear assembly may, for instance, couple the fan blades of the cooling fan 120 to the mechanical coupling part and/or magnetic coupling part 106.

In some embodiments, and referring again to FIG. 1, the detachable food preparation utensil 100 comprises a utensil housing 126. The utensil housing 126 may, for instance, house the at least part of the detachable food preparation utensil 100 that is cooled by the utensil cooling fan 120.

In some embodiments, such as shown in FIG. 1, at least one gap 128, 130 is provided in the utensil housing 126 to allow, at least when the detachable food preparation utensil 100 is coupled to the kitchen appliance 102, (i) supply of air 122 from outside the utensil housing 126 to cool the at least part of the detachable food preparation utensil 100; and/or (ii) release of air 124 heated by the at least part of the detachable food preparation utensil 100 to the outside of the utensil housing 126.

In some embodiments, such as shown in FIGs. 1, 2A, 2B and 3, the at least one gap 128, 130 comprises at least one outlet gap 128 for releasing the air heated by the at least part of the detachable food preparation utensil 100 to the outside of the utensil housing 126. In such embodiments, the utensil cooling fan 120 may be arranged to force the air heated by the at least part of the detachable food preparation utensil 100 through the outlet gap(s) 128.

Alternatively or additionally, the at least one gap 128, 130 may comprise at least one inlet gap 130 for receiving air from outside the utensil housing 126 to cool the at least part of the detachable food preparation utensil 100. In such embodiments, the utensil cooling fan 120 may be arranged to draw the air from outside the utensil housing 126 through the inlet gap(s) 130 and to the at least part of the detachable food preparation utensil 100.

In some embodiments (not shown in the Figures), one or more of the at least one inlet gap 130 is arranged to receive air from an air cooling channel of the kitchen appliance 102 when the detachable food preparation utensil 100 is coupled to the kitchen appliance 102.

Alternatively or additionally, one or more of the at least one outlet gap 128 is arranged to release the air heated by the at least part of the detachable food preparation utensil 100 into an air cooling channel of the kitchen appliance 102 when the detachable food preparation utensil 100 is coupled to the kitchen appliance 102.

The detachable food preparation utensil 100 may include an air channel assembly 131, e.g. an air channel assembly 131 that is at least partly defined inside the utensil housing 126, in which the flow of air is guided to and then away from the at least part of the detachable food preparation utensil 100. The flow guidance provided by the flow channel assembly 131 may assist to guide the flow of air around, and thereby provide cooling to, the temperature-sensitive/vulnerable component(s) 119 included in the detachable food preparation utensil 100, such as the bearing(s), seal(s), and/or magnet(s).

The air channel assembly 131 may include air channel(s) that extend between the at least one inlet gap 130 and the at least one outlet gap 128 via the part(s) of the detachable food preparation utensil 100 cooled by the flow of air.

It is noted at this point that the present disclosure partly relates to the detachable food preparation utensil 100 per se, since the detachable food preparation utensil 100 can in principle be supplied to a user separately from the kitchen appliance 102 to which the detachable food preparation utensil 100 is detachably couplable. In this case, the kitchen appliance 102 may already be in the user's possession or may be sourced by the user separately from the detachable food preparation utensil 100.

The present disclosure nonetheless further provides a food preparation assembly 132 comprising the detachable food preparation utensil 100 and the kitchen appliance 102. Thus, the user can be conveniently supplied with the kitchen appliance 102 together with the detachable food preparation utensil 100.

In some embodiments, such as shown in FIG. 1, the kitchen appliance 102 comprises an appliance cooling fan 134, provided in addition to the utensil cooling fan 120 that is included in the detachable food preparation utensil 100. The appliance cooling fan 134 may be configured to generate a further flow of air to cool at least part of the food preparation assembly 132, e.g. at least part of the kitchen appliance 102 and/or the food preparation utensil 100.

In some embodiments, the at least part of the food preparation assembly 132 that is cooled by the appliance cooling fan 134 comprises the actuator 110, 112, e.g. the motor 110 and/or the appliance coupling 112. Electronics in the kitchen appliance 102 can alternatively or additionally be cooled by the appliance cooling fan 134.

In some embodiments, the appliance cooling fan 134 is driven by the motor 110, e.g. the same motor 110 that is cooled by operation of the appliance cooling fan 134.

The appliance cooling fan 134 may be arranged to draw air, e.g. ambient air from outside the food preparation assembly 132, towards the at least part of the food preparation assembly 132 (as schematically represented in FIG. 1 by the arrows 136), and force air heated by the at least part of the food preparation assembly 132 away therefrom, e.g. to the outside of the food preparation assembly 132 (as schematically represented in FIG. 1 by the arrows 138).

In some embodiments, such as shown in FIG. 1, the kitchen appliance 102 comprises an appliance housing 140. The appliance housing 140 may, for instance, house the at least part of the food preparation assembly 132, e.g. the actuator 110, 112, that is cooled by the appliance cooling fan 134.

In some embodiments, such as shown in FIG. 1, at least one opening 142, 144 in the appliance housing 140 is provided to allow (i) supply of air 136 from outside the appliance housing 140 to cool the at least part of the food preparation assembly 132; and/or (ii) release of air 138 heated by the at least part of the food preparation assembly 132 to the outside of the appliance housing 140.

The at least one opening 142, 144 may comprise at least one outlet opening 142 for releasing the air heated by the at least part of the food preparation assembly 132 to the outside of the appliance housing 140. In such embodiments, the utensil cooling fan 120 and/or the appliance cooling fan 134 may be arranged to force the air heated by the at least part of the food preparation assembly 132 through the outlet opening(s) 142.

Alternatively or additionally, the at least one opening 142, 144 may comprise at least one inlet opening 144 for receiving air from outside the appliance housing 140 to cool at least part of the food preparation assembly 132. In such embodiments, the utensil cooling fan 120 and/or the appliance cooling fan 134 may be arranged to draw the air from outside the appliance housing 140 through the inlet opening(s) 144 and to the at least part of the food preparation assembly 132.

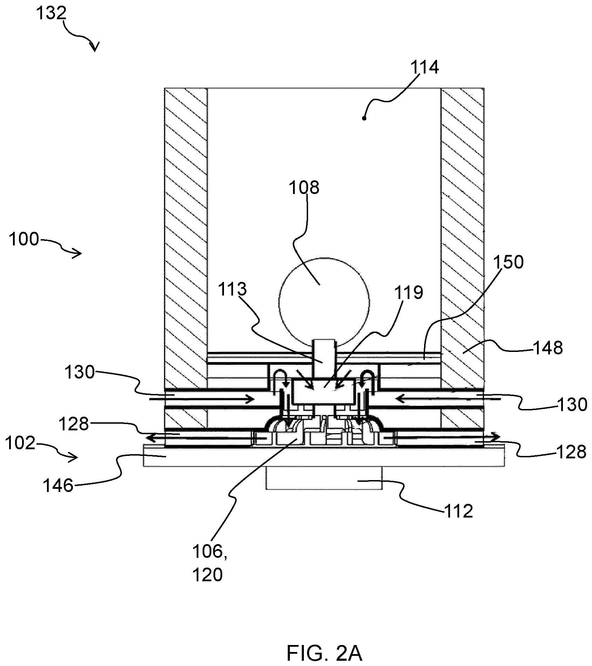

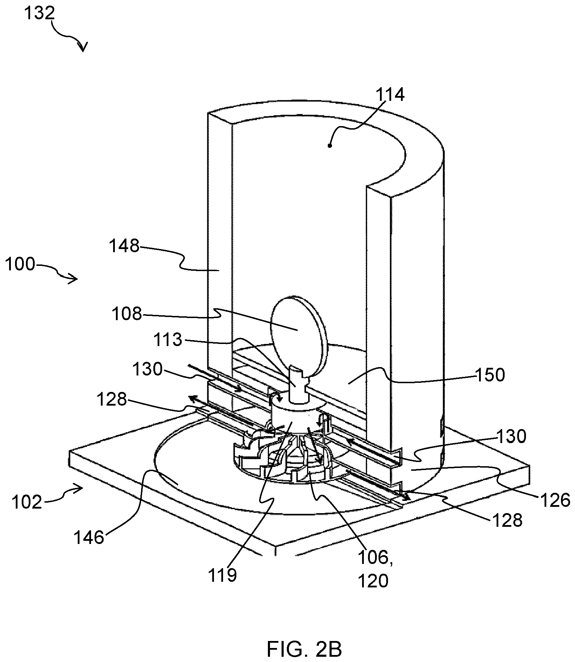

In some embodiments, such as shown in FIGs. 2A and 2B, the kitchen appliance 102 comprises a heat-generating or heat-transmitting support base 146 for at least partially supporting the detachable food preparation utensil 100, and enabling heating of food ingredients on and/or in the detachable food preparation utensil 100.

In such embodiments, food ingredients may be heated via thermally conductive wall(s) 148 that at least partly delimit the container 114.

The detachable food preparation utensil 100 may include a heat isolating material 150 for protecting part(s) of the detachable food preparation utensil 100, e.g. the temperature-sensitive/vulnerable part(s) 119 such as bearing(s) and/or seal(s), from the heat used to heat or cook the food ingredients.

In such embodiments, the heat isolating material 150 may, for example, be arranged at a base of the container 114.

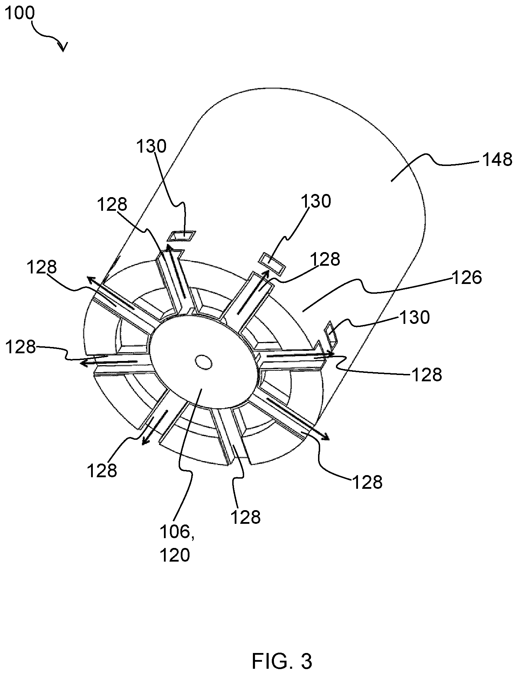

FIGs. 2A, 2B and 3 show an example in which the utensil cooling fan 120 is, or at least the blades thereof are, attached to the mechanical and/or magnetic coupling part 106 of the detachable food preparation utensil 100.

FIG. 3 provides a view of the detachable food preparation utensil 100 when it is detached from the kitchen appliance 102.

It is noted that whilst cooling channels for carrying the flow of air are evident in FIG. 3, gap(s) 128, 130 provided in the utensil housing 126 may be sufficient for supply/release of air for cooling part(s) of the detachable food preparation utensil 100.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

The mere fact that certain measures are recited in mutually different dependent claims does not indicate that a combination of these measures cannot be used to advantage.

If the term "adapted to" is used in the claims or description, it is noted the term "adapted to" is intended to be equivalent to the term "configured to".

Any reference signs in the claims should not be construed as limiting the scope.

## Claims

1. A detachable food preparation utensil (100) for detachably coupling to a kitchen appliance (102), the detachable food preparation utensil comprising an actuation assembly (106, 108) that is actuatable by an actuator (110, 112) of the kitchen appliance to enable a mechanical operation to be implemented by the detachable food preparation utensil when coupled to the kitchen appliance, wherein the detachable food preparation utensil further comprises a utensil cooling fan (120) configured to generate a flow of air to cool at least part of the detachable food preparation utensil at least when the detachable food preparation utensil is coupled to the kitchen appliance.

2. The detachable food preparation utensil (100) according to claim 1, wherein the utensil cooling fan (120) is actuatable by the actuator (110, 112) of the kitchen appliance (102) to provide the flow of air.

3. The detachable food preparation utensil (100) according to claim 1 or claim 2, comprising a gear assembly configured to enable the utensil cooling fan (120) and at least part of the actuation assembly (106, 108) to be driven by the actuator (110, 112) at different speeds relative to each other.

4. The detachable food preparation utensil (100) according to any one of claims 1 to 3, comprising an air channel assembly (131) in which the flow of air is guided to and then away from the at least part of the detachable food preparation utensil.

5. The detachable food preparation utensil (100) according to any one of claims 1 to 4, wherein the at least part of the detachable food preparation utensil comprises at least one bearing, at least one seal, and/or at least one magnet.

6. The detachable food preparation utensil (100) according to any one of claims 1 to 5, wherein the actuation assembly (106, 108) comprises a mechanical coupling part and/or magnetic coupling part (108) for mechanically and/or magnetically coupling to an appliance coupling part (112) of the kitchen appliance (102).

7. The detachable food preparation utensil (100) according to any one of claims 1 to 6, comprising a food implement (108) that is moveable by the actuator (110, 112) to enable mechanical processing of food ingredients; optionally wherein the food implement is in the form of a food processing tool, a blender tool, a stirrer tool, a cutter, a dough kneader or a mixer.

8. The detachable food preparation utensil (100) according to any one of claims 1 to 7, comprising a heatable portion (116) that is heatable by operation of a heating element (118) of the kitchen appliance (102); optionally wherein the heating element is a resistive heating element or an induction heating element.

9. The detachable food preparation utensil (100) according to any one of claims 1 to 8, comprising a container (114) in which food ingredients are receivable for processing via the mechanical operation implemented by the detachable food preparation utensil.

10. The detachable food preparation utensil (100) according to any one of claims 1 to 9, comprising a utensil housing (126), at least one gap (128, 130) being provided in the utensil housing to allow, at least when the detachable food preparation utensil is coupled to the kitchen appliance:
supply of air from outside the utensil housing to cool the at least part of the detachable food preparation utensil; and/or
release of air heated by the at least part of the detachable food preparation utensil to the outside of the utensil housing.

11. The detachable food preparation utensil (100) according to claim 10, wherein the at least one gap (128, 130) comprises at least one outlet gap (128) for releasing the air heated by the at least part of the detachable food preparation utensil to the outside of the utensil housing (126).

12. The detachable food preparation utensil (100) according to claim 10 or claim 11, wherein the at least one gap (128, 130) comprises at least one inlet gap (130) for receiving air from outside the utensil housing (126) to cool the at least part of the detachable food preparation utensil.

13. A food preparation assembly (132) comprising:
the detachable food preparation utensil (100) according to any one of claims 1 to 12; and
a kitchen appliance (102) to which the detachable food preparation utensil is detachably couplable, the kitchen appliance comprising an actuator (110, 112) for actuating the actuation assembly (106, 108) to implement the mechanical operation when the detachable food preparation utensil is coupled to the kitchen appliance; optionally wherein the kitchen appliance comprises a heating element (118) operable to heat a heatable portion (116) of the food preparation utensil.

14. The food preparation assembly (132) according to claim 13, wherein the kitchen appliance (102) comprises an appliance cooling fan (134) configured to generate a further flow of air to cool at least part of the food preparation assembly.

15. The food preparation assembly (132) according to claim 13 or claim 14, wherein the kitchen appliance (102) comprises an appliance housing (140), at least one opening (142, 144) in the appliance housing being provided to allow:
supply of air from outside the appliance housing to cool the at least part of the food preparation assembly; and/or
release of air heated by the at least part of the food preparation assembly to the outside of the appliance housing.
